(19) Europäisches Patentamt
European Patent Office
Office européen des brevets

(11) Publication number: **0 091 555**
**B1**

(12) **EUROPEAN PATENT SPECIFICATION**

(45) Date of publication of patent specification: **26.11.86**

(51) Int. Cl.$^4$: **C 03 B 19/10**, C 03 C 12/00, C 03 C 17/30, B 01 J 2/04

(21) Application number: **83102151.4**

(22) Date of filing: **04.03.83**

(54) **Hollow microspheres with organosilicon-silicate surfaces.**

(30) Priority: **08.04.82 US 366502**

(43) Date of publication of application:
**19.10.83 Bulletin 83/42**

(45) Publication of the grant of the patent:
**26.11.86 Bulletin 86/48**

(84) Designated Contracting States:
**BE DE FR GB IT**

(58) References cited:
**US-A-3 888 957**
**US-A-4 133 854**
**US-A-4 257 799**

(73) Proprietor: **PQ Corporation**
**Valley Forge Executive Mall P.O. Box 840**
**Valley Forge, PA 19482 (US)**

(72) Inventor: **Sands, Bruce W.**
**10 Oak Hill Circle**
**Malvern, PA. 19355 (US)**
Inventor: **Nehring, Robert J., Jr.**
**1011 New Hope Street**
**Norristown, PA. 19401 (US)**

(74) Representative: **Kraus, Walter, Dr. et al**
**Patentanwälte Kraus, Weisert & Partner**
**Thomas-Wimmer-Ring 15**
**D-8000 München 22 (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to hollow microspheres with essentially siliceous shells. In particular, the invention comprises hollow microspheres of a new composition that have improved physical characteristics and a low surface energy and methods for preparing them.

Essentially siliceous hollow microspheres are well known articles of commerce which can be used as fillers for various polymer systems, explosives, syntactic foams, etc. These products are made in a number of ways, the most common being passing certain solid particles of glass-forming materials through spherulizing furnaces or spray drying solutions of film-forming materials. The former results in a fused surface, a modified surface energy and somewhat lower chemical reactivity. The spray drying methods which are disclosed in US—A—3,699,050; 3,794,503; 3,796,777; 3,838,998 and 3,888,957 appear to form microspheres that are more reactive. Particularly US—A—3,888,957 describes a method for preparing hollow microspheres by spray drying a solution of an alkali metal silicate (usually sodium silicate) and a polysalt such as ammonium pentaborate, sodium pentaborate and sodium hexametaphosphate. The formation of the hollow microspheres is followed by further heating to provide low water content and reduced solubility. While the microspheres exit the spray dryer as discrete spheres, their high energy, polar and reactive surfaces quickly result in particle agglomeration and caking. These properties often result in breakage during processing and prevent the microspheres from settling well and expelling air from containers. Maintaining the hollow integrity of these products is an important consideration in their value. Solid flow conditioning agents may be added to the microspheres after spray drying in an effort to mitigate these problems. These additives are not totally effective, and detract from product quality. It is apparent that changing the composition, reducing the reactivity and lowering the surface energy of these microspheres as they are forming results in important product improvements.

One method of modifying the surfaces of some siliceous fillers has been to coat them with various materials such as organosilanes. US—A—3,915,735 and 4,141,751 teach the silane coating of microcrystalline silica by pouring or spraying the silane onto a tumbling bed of the silica. US—A—4,134,848 teaches slurrying a hollow microsphere with a solution containing a silane to form a coated microsphere. There are, of course, numerous teachings in the literature to silane coating various substrates, but the references cited herein appear to the be the most relevant.

The present invention is directed to hollow microspheres of 5 to 300 μm diameter which shells containing alkali metal silicate and a polysalt, said shells having an organo-silicon-silicate surface, said polysalt being an inorganic salt of an alkali metal and/or ammonium cations wherein the anion to cation ratio is reduced when the salt is dissolved and becomes hydrolyzed, said alkali metal silicates having 1.5 to 4.0 moles of $SiO_2$ per mole of $M_2O$ wherein M is sodium or potassium, and said organosilicon being the thermally and hydrolytically stable portion of an initial organosilicon compound having at least one thermally stable and non-hydrolyzable organic group and one or more reactive groups.

These hollow microspheres can be prepared by a process comprising the steps of:

(a) forming a homogeneous solution of 0.02 to 3.0 parts by weight of a polysalt for each part by weight of an alkali metal silicate, said "polysalt" being an inorganic salt of an alkali metal and/or ammonium cations wherein the anion to cation ratio is reduced when the salt is dissolved and becomes hydrolyzed, said alkali metal silicates having 1.5 to 4.0 moles of $SiO_2$ per mole of $M_2O$, wherein M is sodium or potassium;

(b) injecting said homogeneous polysalt-silicate solution into a spray dryer with an inlet temperature of about 150 to 500°C and an outlet temperature of about 100 to 400°C, and simultaneously injecting into said spray dryer a liquid containing an organosilicon compound through a separate injection device in close proximity to the injection point for the homogeneous polysalt-silicate solution, said organosilicon compound having at least one thermally stable and non-hydrolyzable organic group and one or more reactive groups; and

(c) recovering the product from the spray dryer.

Post-coating previously prepared microspheres with silanes as taught by the prior art does not provide the product improvements of our composition. We have found that by simultaneously forming the microsphere by spray drying and exposing it with an organosilicon compound in an aerosolized form, a much improved product is realized. The microsphere is prepared by spray drying a solution formed by mixing an alkali metal silicate and a polysalt. The organosilicon compound, such as a silane, is atomized into the spray dryer at the same time but in a different feed stream. The organosilicon compound reacts with, becomes completely integrated into, and forms the surface of the microsphere which when recovered from the spray dryer remains discrete and free-flowing. The product remains completely free-flowing for an extended period of time under a variety of packaging and atmospheric conditions. The product from the spray dryer may be useful, or a further reduction of the moisture level can be accomplished by drying in any convenient manner. In addition, the product settles and replaces air rapidly and efficiently from containers. A further advantage is that the less reactive microspheres appear to be more perfect and less porous; i.e., there are fewer holes and fragments in the improved product than in the product without the organosilicon compound. The improved microspheres also appear to be more spherical and have smoother surfaces. These improvements provide better filler properties and overall utility. The lower

surface energy and reactivity also contribute to the usefulness of the microspheres as fillers since the viscosity of a filled liquid system is lower, and a higher loading of microspheres is possible.

The improved microsphere products require no solid flow-conditioning agents and have improved water-resistivity over microspheres requiring flow-conditioning agents. The product with the organosilicon surface is not wetted by water and floats on it for a long time while the nonreacted microspheres are wetted and sink immediately.

Nearly any siliceous film-forming combination that is soluble in a volatile solvent can form the basis microsphere of our composition. The most useful film-forming system for our composition is a combination of alkali metal silicate and a polysalt. US—A—3,796,777; 3,794,503 and 3,888,957 describe these systems in detail and define "polysalts" as inorganic salts with anion-to-cation ratios that are reduced when the salts dissolve and become hydrolyzed. Complex borates and phosphates are useful salts. We prefer ammonium pentaborate (APB), sodium pentaborate (SPB) or sodium hexametaphosphate (SHP). We especially prefer APB.

The silicates that form an important part of our composition are commercially available solutions or soluble glasses or powders. The solutions contain 15 to 60% total solids and 1.5 to 4.0 moles of $SiO_2$ per mole of $M_2O$ wherein M is an alkali metal. We prefer sodium silicates that contain 1.8 to 2.8 moles of $SiO_2$ per mole of $Na_2O$.

A homogeneous solution of the silicate and "polysalt" is formed by adding the salt solution to the silicate under agitation. The ratio of "polysalt" solids to silicate solids should be between 0.02:1.0 and 3.0:1.0, and the homogeneous solution to be spray dried can have about 5 to 50% total solids. If a solution of APB and sodium silicate is used, the total solids would be 5 to 35% with 3 to 15% as APB; the ratio of APB solids to silicate solids should be between 0.03:1 and 0.5:1, preferably between 0.06:1 and 0.5:1. A solution having 0.02 to 0.3 parts by weight (pbw) of SPB per pbw of silicate solids contains 17.4 to 34.5% total solids and 6 to 7% SPB solids. A solution having 1 to 3 pbw of SHP per 1 pbw of silicate solids contains 29.6 to 48% of total solids.

Many organosilicon compounds are useful in the composition of our invention; however, they must have certain structural features and properties. The compound must have at least one thermally stable and non-hydrolyzable group, and one or more highly reactive and/or hydrolyzable groups for bonding with the silicate-polysalt substrate. Preferably, these reactive groups should lead to products that have high vapor pressures such as methanol, acetic acid, ammonia and the like. Halides are useful and are less desirable only because the resulting products are corrosive.

The organosilicon compound can be used neat, as an aqueous or nonaqueous solution, or as an aqueous or non-aqueous dispersion. The compound, solution, or dispersion should be readily atomized so that the droplets injected into the spray dryer are as small as possible and provide the maximum uniform interaction with the silicate-polysalt substrate. The enduring organic group, often called the organofunctional group, should be mostly thermally and hydrolytically stable to the temperatures required in processing.

There are many organosilanes and silicones that can be used in preparing the composition of our invention. These materials can be represented by the formula:

$$R_nSi\,X_{4-n}$$

where n = 1—3, X represents H, Cl, Br, F or OR′ and R′ is from the family of aliphatic hydrocarbons to provide groups such as $OCH_3$, $OCH_2CH_3$, etc. or acetoxy;

where R represents alkyl, alkenyl or aryl and their derivatives having varying functionalities, but which remain thermally and hydrolytically stable and bound to the silicon.

It is preferred that X be readily hydrolyzed so that upon introduction to an aqueous environment the species $R_nSi(OH)_{4-n}$ is produced and when in the presence of the silicate surface forming in the spray dryer it reacts therewith to form a polymeric silane-silicate structure which constitutes the surface of our hollow microsphere. It is also preferred that n = 1 so that there are several bonds formed between the substrate and the organosilane according to the following equation:

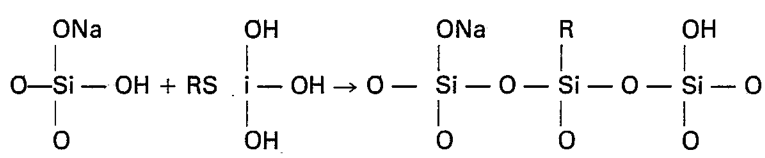

Silicate Organosilane Surface of the microsphere

While silanes with n = 3 are useful in the process of our invention, they are not so completely integrated into the surface of the microsphere, as indicated by the following representation:

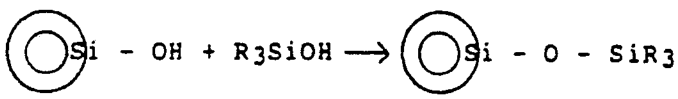

Materials that hydrolyze to form a compound having a silanol group can also be used, such as $R_3SiOSiR_3$ and $R_3SiNHSiR_3$. Structures such as $R_nSi—H_{4-n}$ or low molecular weight oligomers may also be useful. These structures would also include any silicone oligomer or polymer which has SiOH (silanol) functionality or potential, such as $HO[Si(CH_3)_2O]_nH$. We prefer R to be methyl, $CH_3$. We also prefer compounds represented by the formulas:

$$HSiMe_2O(MeSiH)_nOMe_2SiH;$$

$$Me_3SiO(MeSiH)_nOSiMe_3; \text{ or}$$

$$HSiMe_2\ O(SiMe_2)_n\ OMe_2SiH.$$

Silanes are the preferred organosilicon compounds with alkyl alkoxy silanes and aryl alkoxy silanes being most preferred since the hydrolysis products include easily evaporated alcohols. Methyl-, ethyl-, propyl-, butyl-, vinyl-, and phenyl-trimethoxysilane are examples of individual silanes that are useful in the process and hollow microsphere of our invention. These silanes with ethoxy or propoxy groups substituted for the methoxy group are useful. We most prefer to use methyltrimethoxysilane to form the surface desired for our microspheres.

The forming hollow microspheres have a high degree of moisture in their surface and surrounding them, and are alkaline as well, thereby providing a very reactive environment for the reaction and equilibration of the organosilicon compound into the siliceous wall of the hollow microsphere. The hydrolysis products, such as $CH_3OH$, $CH_3CH_2OH$, etc., and water formed by the condensation reaction are removed in the spray dryer and any possible post-drying step. Acid hydrolysis products such as acetic acid, HCl, etc. are probably neutralized by the basic sphere and are retained as sodium salts of the acid.

The desired composition and lower surface energy can be achieved when 0.05 to 5.0% of the organosilicon based on the weight of the microsphere forming solids is used. Good results are obtained at levels of 0.1 to 3.0%. We prefer about 1%, depending on the organosilicon compound used.

The composition of our invention can be prepared as follows. The siliceous film-forming solution (usually a silicate- "polysalt" solution) is prepared, observing whatever controls of temperature, mixing and order of addition required. A solution or dispersion of the compound in a volatile, water miscible solvent or the neat organosilicon liquid that can be sprayed or atomized is prepared. This preparation can involve hydrolysis or its equivalent to form the readily atomized solution. Both the film-forming solutions and the liquid containing the organosilicon compound are injected into a spray dryer at the same time, but through separate spray nozzles or atomizer disks. Nearly any conventional spray drying equipment with either spray nozzles or disk atomizers can be used for our process. The separate injection points for the organosilicon compound should be close, so that as the microsphere forms by the drying and expansion of a droplet of the film forming solution, it encounters the organosilicon material which immediately penetrates and interacts with the microsphere, thereby forming the desired microsphere composition.

The inlet temperature of the spray dryer can be 150 to 500°C with an outlet temperature of 100 to 400°C. The product recovered from the spray dryer can be ready for packaging and/or use, even though it may contain 10 to 17% water. Because of the lower reactivity and surface energy, these materials remain free-flowing in spite of their high water content. The spray dryer product can be dried further by heating the hollow microspheres to temperatures between 70 and 400°C slowly in any convenient manner. We prefer that the microspheres not be cooled down before this drying step. If they are cooled, they must be heated very carefully to prevent overexpansion and/or breakage. The product of this drying step will have less than about 10% and probably greater than about 5% water as chemically bound water.

The product of this process is a mass of hollow, discrete microspheres with shells consisting of a polysalt and silicate that converts to the organosilicon-silicate structure at the surface. The microspheres are and remain free-flowing at high moisture levels (up to 15% or more) as well as lower levels (<10%) and neither product requires the addition of flow control agents. Products at both moisture levels remain free-flowing for long periods of time, while the products with the lowest moisture levels are free-flowing indefinitely for all practical purposes. The particle size of the product can be varied between 5 and 300 microns with bulk densities (BD) of 0.02 to 0.24 g/cm$^3$, true particle densities (TD) of 0.05 to 0.90 g/cm$^3$ and effective densities (ED) of 0.05 to 0.90 g/cm$^3$. The BD is simply the weight of the microspheres per unit of dry volume. TD is the weight of microspheres replacing a volume of air in an air pycnometer and the ED is a measure of the filling capacity of the material in a liquid. The ratio TD/BD (the inverse is the packing factor) is important in that it is an indication of the integrity of the product. As the product microspheres become more perfect by preparing the microsphere of our invention, i.e. containing fewer fragments and fewer porous entities, this ratio approaches 1. We consider TD/BD ratios of 1.2 to 1.9 that are characteristic of our product to be excellent. Many prior art materials have TD/BD ratios of 2 or more. These lower TD/BD ratios are also important in that they are indicative of better particle packing and product handling and packaging

characteristics. Other product advantages include decreased water sensitivity when compared with microspheres that do not exhibit the organosilicon-silicate structure of our microspheres. Since our products are more water resistant, they exhibit lower pH and reduced solubility of $Na_2O$, $SiO_2$ and $B_2O_3$ in aqueous environments.

Even more important are the improved filler properties of our microspheres. Since the product contains fewer fragments and is less porous, it more effectively displaces the liquid in which it is used than prior art microspheres for each unit of weight. While improved displacement is important, the interaction between the microsphere and the liquid (usually but not always a polymer to be set later) is also important in establishing value of the product as a filler. Low TD and lower porosities indicate good filler properties. We find that the microspheres of our invention have porosities that are about 0.1 to 0.6 of those exhibited by prior art spray dried microspheres even if they have been coated with an organosilicon after formation of the microspheres is completed. We also find that microspheres of our invention have less effect on the viscosity of organic liquids and presumably liquid polymer systems prior to setting. For example, our microspheres increase the viscosity of dioctyl phthalate (DOP) by 0.05 to 0.7 of the increase shown when prior art microspheres are used. Such differences are most conveniently determined at high loading; we have used 55% v/v. A number of other property differences are illustrated in the following examples.

## Examples

Certain embodiments of our invention and certain aspects of the prior art are illustrated in the examples. They are not meant to establish the scope of our invention. The scope is established in the disclosure and recited in the claims. The proportions are in parts by weight (pbw), parts by volume (pbv), percent by weight (% w/w) or percent by volume (% v/v) unless otherwise indicated.

### Example 1

This example illustrates the prior-art method of preparing microspheres using the film-forming system of sodium silicate and a polysalt. Sodium silicate (500 pbw of 2.0 $SiO_2/Na_2O$ 44% solids) was thoroughly mixed with 500 pbw of a 10% w/w APB solution heated above 60°C. Mixing was continued until any lumps were dispersed. The resulting homogeneous solution was fed to a spray dryer with an inlet temperature of 400 to 450°C and an outlet temperature of 140 to 180°C. The atomizer pressure was 4 to 8 kg/cm$^2$. These spray dryer conditions were varied to provide the products described hereinafter. The product recovered was subjected to a further drying step in an oven. The temperature was initially below 100°C and gradually raised to about 300°C in about an hour. Heating continued until the product contained less than 3.3% water. Both products caked very quickly and were therefore not suitable for the projected use.

### Example 2

The process described in Example 1 was repeated except that a finely divided silica was added to the products exiting the spray dryer to prevent caking. Sufficient of the silica was used to render the products free-flowing-about 6 to 7% was required. One product (Run III-1) made in this manner had a BD of 0.105 g/cm$^3$. Another product (Run II-2) had a BD of 0.090 g/cm$^3$. The properties of these materials are summarized and compared with other hollow microsphere products in Table 1.

### Example 3

A hollow microsphere product III-2 similar to that produced by Run III-1 was coated with a silane as described in the prior art, which we call post-coating since it occurs after formation and any subsequent processing of the spheres. Methyltrimethoxysilane (2.5 pbw) was pre-hydrolyzed in 45 pbw of methanol containing 2.5 pbw of water and 1 drop of acetic acid. The mixture was allowed to stir for 5 minutes. The hollow microspheres were mildly agitated in a blender while the pre-hydrolyzed silane was added. After adding the silane blending was continued for an additional 15 minutes. The product (Run IV-1) was dried in an oven at 105°C for about 16 hours. The general characteristics of the starting microspheres III-2 and the silane-coated product IV-1 are given in subsequent tables.

### Example 4

The process described in Example 1 was repeated except that a hydrolyzed silane was introduced into the spray dryer. The silane was metered to a two-fluid nozzle located in the side of the spray dryer below the atomizing means for the silicate-polysalt injection. The silane was methyltrimethoxysilane reacted at a level of 20% w/w in water adjusted to a pH of about 3.5 with 0.05% w/w of acetic acid. The rate of silane addition to the spray dryer was varied to achieve levels of treatment of 0.5, 1 and 20% w/w. The products from both the spray dryer and the dryer were free-flowing and have remained so for over a year. In another run a solution of 10% w/w methyltrimethoxysilane in water was used. After the feed rate of the silane was adjusted to provide a level of 1% silane a sample designated V-3 was taken after the second drying step. A second sample V-4 was taken after the spray drying condition had been changed to provide a lower density product. This silane and the dosage was the same. This sample was also subjected to the secondary drying step to reduce the moisture level to less than 7% w/w.

Example 5

The properties of the products prepared as described in Examples 2, 3 and 4 were determined and are summarized in Table 1.

TABLE 1
Properties of Microspheres Comparing the Products of our Invention with Those of the Prior Art

| Property | V-4 | V-3 | IV-1 | III-1 | II-2 | III-2 |
|---|---|---|---|---|---|---|
| TD ($g/cm^3$) | 0.183 | 0.207 | 0.257 | 0.224 | 0.223 | 0.258 |
| ED ($g/cm^3$) | 0.169 | 0.193 | 0.208 | 0.197 | 0.181 | 0.222 |
| BD ($g/cm^3$) | 0.128 | 0.125 | 0.106 | 0.105 | 0.090 | 0.101 |
| TD/BD | 1.43 | 1.66 | 2.42 | 2.13 | 2.48 | 2.55 |
| % Porosity | 8 | 7.2 | 23.6 | 13.7 | 23.2 | 16.2 |
| LOI | 5.9 | 5.9 | — | 5.7 | — | — |
| LOD | 0.22 | 0.21 | — | 0.47 | — | — |
| Surface Area, $M^2/g$ | 2.49 | 1.42 | — | 8.83 | — | — |

We have calculated the percent porosity using the following equation.

$$\% P = 100 \frac{TD - ED}{ED}$$

Example 6

The example illustrates the advantage of the microspheres of our invention in regard to the viscosities of liquid systems when filled with microspheres. DOP was used as the organic liquid and a 55% v/v loading of microspheres conveniently indicated the differences between our microspheres and those of the prior art. The viscosities were determined on a Brookfield viscometer, Model RVT, with a #4 spindle at 5 rpm, 5 minutes after the microspheres were dispersed in the DOP. These results are summarized in Table II. Viscosities of DOP loaded with 55% v/v of the microspheres of our invention can be 2500 to 5500 cp.

TABLE II
Viscosity Index of Microspheres in DOP

| Sample Number | Viscosity cp 5 min. |
|---|---|
| V-4 | 3,200 |
| V-3 | 2,800 |
| IV-1 | 9,200 |
| III-2 | 16,600 |
| III-1 | 8,800 |
| II-2 | 13,400 |

These results show clearly that the microspheres of our invention (samples V-4 and V-3) do not interact with the organic matrix or with themselves as strongly as do the prior-art materials including the silane post-coated material, sample IV-1.

**Claims**

1. Hollow microspheres of 5 to 300 microns diameter with shells containing alkali metal silicate and a polysalt, said shells having an organosilicon-silicate surface, said polysalt being an inorganic salt of an alkali metal and/or ammonium cations wherein the anion to cation ratio is reduced when the salt is dissolved and becomes hydrolyzed, said alkali metal silicates having 1.5 to 4.0 moles of $SiO_2$ per mole of $M_2O$ wherein M is sodium or potassium, and said organosilicon being the thermally and hydrolytically stable portion of an initial organosilicon compound having at least one thermally stable and non-hydrolyzable organic group and one or more reactive groups.

2. The hollow microspheres of claim 1 wherein the ratio of polysalt solids to silicate solids is between 0.02:1 and 3.0:1 and the organosilicon constitutes 0.01 to 4.0% by weight of said microspheres.

3. The hollow microspheres of either of claims 1 or 2 wherein said polysalt is ammonium pentaborate (APB), the weight ratio of APB solids to silicate solids being between 0.03:1 and 0.5:1, sodium pentaborate (SPB), the weight ratio of SPB solids to silicate solids being between 0.02:1 and 0.3:1; or sodium hexametaphosphate (SHP), the weight ratio of SHP solids to silicate solids being between 1:1 and 3:1.

4. The hollow microspheres of claim 2 wherein the weight ratio of APB solids to silicate solids is between 0.06:1 and 0.5:1.

5. The hollow microspheres of either of claims 1 or 2 wherein the initial organosilicon compound is represented by the formula:

$$R_nSiX_{4-n}$$

where n = 1 to 3, X represents Cl, Br, F or OR′ and R′ is from the family of aliphatic hydrocarbons and provides volatile products upon hydrolysis of thermal decomposition, and where R represents an alkyl, alkenyl or aryl group and their derivatives having varying functionalities but which remain thermally and hydrolytically stable and bound to the silicon.

6. The hollow microspheres of claim 5 wherein n = 1.

7. The hollow microspheres of either of claims 1 or 2 wherein the initial organosilicon compound is an organosilane.

8. The hollow microspheres of claim 7 wherein the organosilane is an alkylalkoxy silane or an arylalkoxy silane.

9. The hollow microspheres of claim 7 wherein the organosilane is selected from the group consisting of methyl-, ethyl-, propyl-, butyl-, vinyl- and phenyl-triethoxysilane and methyl-, ethyl-, propyl-, butyl-, vinyl- and phenyl-tripropoxysilane.

10. The hollow microspheres of claim 7 wherein the organosilane is methyltrimethoxysilane.

11. The hollow microspheres of either of claims 1 or 2 wherein the initial organosilicon compound is represented by the formulas $R_3SiOSiR_3$, $R_3SiNHSiR_3$ or $R_nSi—H_{4-n}$ wherein R is an aliphatic hydrocarbon.

12. The hollow microspheres of claim 11 wherein R is methyl.

13. The hollow microspheres of any of claims 1, 2, 5, 7 or 11 wherein said microspheres contain 10 to 17% by weight of moisture including chemically bound water.

14. The hollow microspheres of any of claims 1, 2, 5, 7 or 11 wherein said microspheres contain 5 to 10% by weight of moisture including chemically bound water.

15. The process of preparing hollow microspheres of 5 to 300 microns diameter with shells containing alkali metal silicate and a polysalt, said shells having an organosilicon-silicate surface, comprising the steps of:

(a) forming a homogeneous solution of 0.02 to 3.0 parts by weight of a polysalt for each part by weight of an alkali metal silicate, said "polysalt" being an inorganic salt of an alkali metal and/or ammonium cations wherein the anion to cation ratio is reduced when the salt is dissolved and becomes hydrolyzed, said alkali metal silicates having 1.5 to 4.0 moles of $SiO_2$ per mole of $M_2O$, wherein M is sodium or potassium;

(b) injecting said homogeneous polysalt-silicate solution into a spray dryer with an inlet temperature of about 150 to 500°C and an outlet temperature of about 100 to 400°C, and simultaneously injecting into said spray dryer a liquid containing an organosilicon compound through a separate injection device in close proximity to the injection point for the homogeneous polysalt-silicate solution, said organosilicon compound having at least one thermally stable and non-hydrolyzable organic group and one or more reactive groups; and

(c) recovering the product from the spray dryer.

16. The process of claim 15 wherein the product recovered from the spray dryer is further dried slowly at temperatures between 70 and 400°C.

17. The process of either of claims 15 or 16 wherein said polysalt is ammonium pentaborate (APB), the weight ratio of APB solids to silicate solids being between 0.03:1 and 0.5:1; sodium pentaborate (SPB), the weight ratio of SPB solids to silicate solids being between 0.02:1 and 0.3:1; or sodium hexametaphosphate (SHP), the weight ratio of SHP solids to silicate solids being between 1:1 and 3:1.

18. The process of claim 17 wherein the initial organosilicon compound is represented by the formula:

$$R_nSiX_{4-n}$$

where n = 1 to 3, X represents Cl, Br, F or OR' and R' is from the family of aliphatic hydrocarbons and provides volatile products upon hydrolysis of thermal decomposition, and where R represents an alkyl, alkenyl or aryl group and their derivatives having varying functionalities but which remain thermally and hydrolytically stable and bound to the silicon.

19. The process of either of claims 15 or 16 wherein the organosilicon compound is an alkylalkoxysilane or an arylalkoxysilane selected from the group consisting of methyl-, ethyl-, propyl-, butyl-, vinyl- and phenyl-triethoxysilane and methyl-, ethyl-, propyl-, butyl-, vinyl- and phenyl-tripropoxysilane.

20. The process of claim 19 wherein the alkyl alkoxysilane is methyltrimethoxysilane.

21. The process of either of claims 15 or 16 wherein the organosilicon compound is represented by the formulas:

$$R_3SiOSiR_3;$$

$$R_3SiNHSiR_3; \text{ or}$$

$$R_nSi—H_{4-n}$$

wherein R is an aliphatic hydrocarbon.

22. The process of claim 21 wherein R is methyl.

23. The process of either of claims 15 or 16 wherein the organosilicon compound is represented by the formulas:

$$Me_2HO(Me\ Si\ H)_n\ Me_2\ Si\ H$$

$$Me_3O(Me\ Si\ H)_n\ O\ Si\ Me_3$$

$$Me_2H\ Si\ O(Si\ Me_2)_n\ O\ Si\ Me_2\ H$$

**Patentansprüche**

1. Hohle Mikrokugeln mit einem Durchmesser von 5 bis 300 Mikron mit Hüllen, die ein Alkalimetallsilicat und ein Polysalz enthalten, wobei die genannten Hüllen eine Organosilicium-Silicatoberfläche haben, wobei das genannte Polysalz ein anorganisches Salz von Alkalimetall und/oder Ammoniumkationen ist, wobei das Anion/Kation-Verhältnis vermindert ist, wenn das Salz aufgelöst ist und hydrolysiert wird, wobei die genannten Alkalimetallsilicate 1,5 bis 4,0 Mol $SiO_2$ pro Mol $M_2O$, worin M Natrium oder Kalium ist, haben, und wobei das genannte Organosilicium der thermisch und hydrolytisch stabile Teil einer Anfangs-Organosiliciumverbindung ist, die mindestens eine thermisch stabile und nichthydrolysierbare organische Gruppe und ein oder mehrere reaktive Gruppen aufweist.

2. Hohle Mikrokugeln nach Anspruch 1, dadurch gekennzeichnet, daß das Verhältnis von Polysalz-Feststoffen zu Silicat-Feststoffen zwischen 0,02:1 und 3,0:1 liegt und daß der Anteil des Organosiliciums 0,01 bis 4,0 Gew.-% der genannten Mikrokugeln ausmacht.

3. Hohle Mikrokugeln nach Anspruch 1 oder 2, dadurch gekennzeichnet, daß das genannte Polysalz Ammoniumpentaborat (APB), wobei das Gewichtsverhältnis von APB-Feststoffen zu Silicat-Feststoffen zwischen 0,03:1 und 0,5:1 liegt, Natriumpentaborat (SPB), wobei das Gewichtsverhältnis von SPB-Feststoffen zu Silicat-Feststoffen zwischen 0,02:1 und 0,3:1 liegt, oder Natriumhexametaphosphat (SHP), wobei das Gewichtsverhältnis von SHP-Feststoffen zu Silicat-Feststoffen zwischen 1:1 und 3:1 liegt, ist.

4. Hohle Mikrokugeln nach Anspruch 2, dadurch gekennzeichnet, daß das Gewichtsverhältnis von APB-Feststoffen zu Silicat-Feststoffen zwischen 0,06:1 und 0,5:1 liegt.

5. Hohle Mikrokugeln nach Anspruch 1 oder 2, dadurch gekennzeichnet, daß die Anfangs-Organosiliciumverbindung durch die Formel

$$R_nSiX_{4-n}$$

angegeben wird, worin n = 1 bis 3, X für Cl, Br, F oder OR' steht und R' aus der Familie von aliphatischen Kohlenwasserstoffen ist, und nach Hydrolyse oder thermischer Zersetzung, und wenn R für eine Alkyl-, Alkenyl- oder Arylgruppe steht, flüchtige Produkte ergeben, und daß ihre Derivate variierende Funktionalitäten haben, die aber thermisch und hydrolytisch stabil bleiben und an das Silicium gebunden sind.

6. Hohle Mikrokugeln nach Anspruch 5, dadurch gekennzeichnet, daß n = 1.

7. Hohle Mikrokugeln nach Anspruch 1 oder 2, dadurch gekennzeichnet, daß die Anfangs-Organosiliciumverbindung ein Organosilan ist.

8. Hohle Mikrokugeln nach Anspruch 7, dadurch gekennzeichnet, daß das Organosilan ein Alkylalkoxysilan oder ein Arylalkoxysilan ist.

9. Hohle Mikrokugeln nach Anspruch 7, dadurch gekennzeichnet, daß das Organosilan aus der Gruppe

bestehend aus Methyl-, Ethyl-, Propyl-, Butyl-, Vinyl- und Phenyltriethoxysilan und Methyl-, Ethyl-, Propyl-, Butyl-, Vinyl- und Phenyltripropoxysilan ausgewählt ist.

10. Hohle Mikrokugeln nach Anspruch 7, dadurch gekennzeichnet, daß das Organosilan Methyltrimethoxysilan ist.

11. Hohle Mikrokugeln nach Anspruch 1 oder 2, dadurch gekennzeichnet, daß die Anfangs-Organosiliciumverbindung durch die Formeln $R_3SiOSiR_3$, $R_3SiNHSiR_3$ oder $R_nSi—H_{4-n}$, worin R ein aliphatischer Kohlenwasserstoff ist, angegeben wird.

12. Hohle Mikrokugeln nach Anspruch 11, dadurch gekennzeichnet, daß R für Methyl steht.

13. Hohle Mikrokugeln nach einem der Ansprüche 1, 2, 5, 7 oder 11, dadurch gekennzeichnet, daß die genannten Mikrokugeln 10 bis 17 Gew.-% Feuchtigkeit mit Einschluß von chemisch gebundenem Wasser enthalten.

14. Hohle Mikrokugeln nach einem der Ansprüche 1, 2, 5, 7 oder 11, dadurch gekennzeichnet, daß die genannten Mikrokugeln 5 bis 10 Gew.-% Feuchtigkeit mit Einschluß von chemisch gebundenem Wasser enthalten.

15. Verfahren zur Herstellung von hohlen Mikrokugeln mit einem Durchmesser von 5 bis 300 Mikron mit Hüllen, die ein Alkalimetallsilicat und ein Polysalz enthalten, wobei die genannten Hüllen eine Organosilicium-Silicat- oberfläche haben, gekennzeichnet durch die Stufen

(a) Bildung einer homogenen Lösung von 0,02 bis 3,0 Gew.-Teilen eines Polysalzes für jeden Gewichtsteil eines Alkalimetallsilicats, wobei das "Polysalz" ein anorganisches Salz eines Alkalimetalls und/oder von Ammoniumkationen ist, wobei das Anion/Kation-Verhältnis vermindert ist, wenn das Salz aufgelöst wird und hydrolysiert wird, wobei die genannten Alkalimetallsilicate 1,5 bis 4,0 Mol $SiO_2$ pro Mol $M_2O$, wobei M Natrium oder Kalium ist, haben,

(b) Einspritzen der genannten homogenen Polysalz-Silicatlösung in einen Sprühtrockner mit einer Einlaßtemperatur von etwa 150 bis 500°C und einer Auslaßtemperatur von etwa 100 bis 400°C und gleichzeitige Einspritzung einer eine Organosiliciumverbindung enthaltenden Flüssigkeit in den genannten Sprühtrockner durch eine gesonderte Einspritzungsvorrichtung in enger Nähe zu dem Einspritzungspunkt für die genannte homogene Polysalz-Silicatlösung, wobei die genannte Organosiliciumverbindung mindestens eine thermisch stabile und nicht-hydrolysierbare organische Gruppe und eine oder mehrere reaktive Gruppen hat, und

(c) Gewinnung des Produktes aus dem Sprühtrockner.

16. Verfahren nach Anspruch 15, dadurch gekennzeichnet, daß man das aus dem Sprühtrockner gewonnene Produkt weiterhin langsam bei Temperaturen zwischen 70 und 400°C trocknet.

17. Verfahren nach Anspruch 15 oder 16, dadurch gekennzeichnet, daß das genannte Polysalz Ammoniumpentaborat (APB), wobei das Gewichtsverhältnis von APB-Feststoffen zu Silicat-Feststoffen zwischen 0,03:1 und 0,5:1 liegt, Natriumpentaborat (SPB), wobei das Gewichtsverhältnis von SPB-Feststoffen zu Silicat-Feststoffen zwischen 0,02:1 und 0,3:1 liegt, oder Natriumhexametaphosphat (SHP), wobei das Gewichtsverhältnis von SHP-Feststoffen zu Silicat-Feststoffen zwischen 1:1 und 3:1 liegt, ist.

18. Verfahren nach Anspruch 17, dadurch gekennzeichnet, daß die Anfangs-Organosiliciumverbindung durch die Formel

$$R_nSiX_{4-n}$$

angegeben wird, worin n = 1 bis 3, X für Cl, Br, F oder OR' steht und R' aus der Familie von aliphatischen Kohlenwasserstoffen ist, und nach Hydrolyse oder thermischer Zersetzung, und wenn R für eine Alkyl-, Alkenyl- oder Arylgruppe steht, flüchtige Produkte ergeben, und daß ihre Derivate variierende Funktionalitäten haben, die aber thermisch und hydrolytisch stabil bleiben und an das Silicium gebunden sind.

19. Verfahren nach Anspruch 15 oder 16, dadurch gekennzeichnet, daß die Organosiliciumverbindung aus der Gruppe bestehend aus Methyl-, Ethyl-, Propyl-, Butyl-, Vinyl- und Phenyltriethoxysilan und Methyl-, Ethyl-, Propyl-, Butyl-, Vinyl- und Phenyltripropoxysilan ausgewählt ist.

20. Verfahren nach Anspruch 19, dadurch gekennzeichnet, daß das Alkylalkoxysilan Methyltrimethoxysilan ist.

21. Verfahren nach Anspruch 15 oder 16, dadurch gekennzeichnet, daß die Anfangs-Organosiliciumverbindung durch die Formeln

$$R_3SiOSiR_3,$$

$$R_3SiNHSiR_3, \text{ oder}$$

$$R_nSi—H_{4-n},$$

worin R ein aliphatischer Kohlenwasserstoff ist, angegeben wird.

22. Verfahren nach Anspruch 21, dadurch gekennzeichnet, daß R für Methyl steht.

23. Verfahren nach Anspruch 15 oder 16, dadurch gekennzeichnet, daß die Organosilicium-verbindung durch die Formeln

$$Me_2HO(Me\ Si\ H)_n\ Me_2\ Si\ H$$

$$Me_3O(Me\ Si\ H)_nO\ Si\ Me_3$$

$$Me_2H\ Si\ O\ (Si\ Me_2)_n\ O\ Si\ Me_2\ H$$

angegeben wird.

**Revendications**

1. Microsphères creuses de 5 à 300 microns de diamètre avec des enveloppes contenant un silicate de métal alcali et un polysel, ces enveloppes ayant une surface d'organosilicone-silicate, ce polysel étant un sel inorganique de cations métal alcalin et/ou ammonium dans lequel le rapport anion-à-cation est réduit lorsque le sel est dissous et s'hydrolyse, ces silicates de métaux alcalins ayant de 1,5 à 4,0 moles de $SiO_2$ par mole de $M_2O$ où M est du sodium ou du potassium, et cet organosilicone étant la portion thermiquement et hydrolytiquement stable d'un composé organosilicique initial ayant au moins un groupe thermiquement stable et non-hydrolysable et un ou plusieurs groupes réactifs.

2. Microsphères creuses suivant la revendication 1, dans lesquelles le rapport des solides du polysel aux solides du silicate est entre 0,02:1 et 3,0:1 et l'organosilicone constitue 0,01 à 4,0% en poids de ces microsphères.

3. Microsphères creuses suivant la revendication 1 ou la revendication 2 dans lesquelles le polysel est le pentaborate d'ammonium (APB), le rapport pondéral des solides d'APB aux solides de silicate étant entre 0,03:1 et 0,5:1, le pentaborate de sodium (SPB), le rapport pondéral des solides de SPB aux solides de silicate étant entre 0,02:1 et 0,3:1; ou l'hexamétaphosphate de sodium (SHP), le rapport pondéral des solides de SHP aux solides de silicate étant entre 1:1 et 3:1.

4. Microsphères creuses suivant la revendication 2, dans lesquelles le rapport pondéral des solides d'APB aux solides de silicate est entre 0,06:1 et 0,5:1.

5. Microsphères creuses suivant la revendication 1 ou 2, dans lesquelles le composé organosilicique initial est représenté par la formule

$$R_nSiX_{4-n}$$

où n = 1 à 3, X représente Cl, Br, F ou OR' et R' est choisi dans la famille des hydrocarbures aliphatiques et fournit des produits volatils par hydrolyse ou décomposition thermique et où R représente un groupe alcoyle, alcényle ou aryle et leurs dérivés ayant diverses fonctions, mais qui restent thermiquement et hydrolytiquement stables et liés au silicium.

6. Microsphères creuses suivant la revendication 5, dans lesquelles n = 1.

7. Microsphères creuses suivant la revendication 1 ou la revendication 2, dans lesquelles le composé organosilicique initial est un organosilane.

8. Microsphères creuses suivant la revendication 7, dans lesquelles l'organosilane est un alcoylalcoxy silane ou un arylalcoxy silane.

9. Microsphères creuses suivant la revendication 7, dans lesquelles l'organosilane est choisi dans le groupe comprenant le méthyl-, l'éthyl-, le propyl-, le butyl-, le vinyl-, et le phényl-triéthoxysilane et le méthyl-, l'éthyl-, le propyl-, le butyl-, le vinyl-, et le phényl-tripropoxysilane.

10. Microsphères creuses suivant la revendication 7, dans lesquelles l'organosilane est le méthyltriméthoxylane.

11. Microsphères creuses suivant la revendication 1 ou la revendication 2, dans lesquelles le composé organosilique initial est représente, par les formules $R_3SiOSiR_3$, $R_3SiNHSiR_3$ ou $R_nSi—H_{4-n}$ dans lesquelles R est un groupe hydrocarboné aliphatique.

12. Microsphères creuses suivant la revendication 11, dans lesquelles R est un groupe méthyle.

13. Microsphères creuses suivant l'une quelconque des revendications 1, 2, 5, 7 ou 11, dans lesquelles ces microsphères contiennent 10 à 17% en poids d'humidité comprenant l'eau chimiquement liée.

14. Microsphères creuses suivant l'une quelconque des revendications 1, 2, 5, 7 ou 11 dans lesquelles ces microsphères contiennent 5 à 10% en poids d'humidité comprenant l'eau chimiquement liée.

15. Procédé de préparation de microsphères creuses de 5 à 300 microns de diamètre avec des enveloppes contenant un silicate de métal alcalin et un polysel, ces enveloppes ayant une surface d'organosilicone-silicate, comprenant les étages de:

a) formation d'une solution homogène de 0,02 à 3,0 parties en poids d'un polysel par partie en poids de silicate de métal alcalin, ce "polysel" étant un sel inorganique de cations métal alcalin et/ou ammonium dans lequel le rapport anion-à-cation est réduit lorsque le sel est dissous et s'hydrolyse, ces silicates de métaux alcalins ayant 1,5 à 4,0 moles de $SiO_2$ par mole de $M_2O$ où M est du sodium ou du potassium;

b) injection de cette solution homogène de polysel-silicate dans un sécheur-atomiseur avec une température d'entrée d'environ 150 à 500°C et une température de sortie d'environ 100 à 400°C et injection simultanée dans ce sécheur-atomiseur, d'un liquide contenant un composé organosilicique par un dispositif d'injection distinct proche du point d'injection de la solution homogène de polysel-silicate, ce

composé organosilicique ayant au moins un groupe organique thermiquement stable et non-hydrolysable et un ou plusieurs groupes réactifs; et

c) récupération du produit provenant du sécheur-atomiseur.

16. Procédé suivant la revendication 15, dans lequel le produit récupéré en provenance du sécheur-atomiseur est séché davantage lentement à des températures entre 70 à 400°C.

17. Procédé suivant la revendication 15 ou la revendication 16, dans lequel le polysel est le pentaborate d'ammonium (APB), le rapport pondéral des solides d'APB aux solides de silicate étant entre 0,03:1 et 0,5:1, le pentaborate de sodium (SPB), le rapport pondéral des solides de SPB aux solides de silicates étant entre 0,02:1 et 0,3:1, ou l'hexamétaphosphate de sodium (SHP), le rapport pondéral des solides de SHP aux solides de silicate étant entre 1:1 et 3:1.

18. Procédé suivant la revendication 17 dans lequel le composé organosilicique initial est représenté par la formule

$$R_nSiX_{4-n}$$

où n = 1 à 3, X représente Cl, Br, F ou OR' et R' est choisi dans la famille des hydrocarbures aliphatiques et fournit des produits volatiles par hydrolyse ou décomposition thermique, et où R représente un groupe alcoyle, alcényle ou aryle et leurs dérivés ayant diverses fonctions mais qui restent thermiquement et hydrolytiquement stables et liés au silicium.

19. Procédé suivant la revendication 15 ou la revendication 16, dans lequel le composé organosilicique est un alcoylalcoxysilane ou un arylalcoxysilane choisi dans le groupe comprenant le méthyl-, l'éthyl-, le propyl-, le butyl-, le vinyl-, et le phényl-triéthoxysilane et le méthyl-, l'éthyl-, le propyl-, le butyl-, le vinyl- et le phényl-tripropoxysilane.

20. Procédé suivant la revendication 19 dans lequel le groupe alcoylalcoxysilane est le groupe méthyltriméthoxysilane.

21. Procédé suivant la revendication 15 ou la revendication 16, dans lequel le composé organosilicique est représenté par les formules:

$$R_3SiOSiR_3;$$

$$R_3SiNHSiR_3; \text{ ou}$$

$$R_nSi{-}H_{4-n}$$

où R est un groupe hydrocarboné aliphatique.

22. Procédé suivant la revendication 21, dans lequel R est un groupe méthyle.

23. Procédé suivant la revendication 15 ou la revendication 16, dans lequel le composé organosilicique est représenté par les formules:

$$Me_2HO(Me\ Si\ H)_n\ Me_2\ Si\ H$$

$$Me_3O(Me\ Si\ H)_n\ O\ Si\ Me_3$$

$$Me_2H\ Si\ O(Si\ Me_2)_n\ O\ Si\ Me_2\ H$$